(19) Europäisches Patentamt
European Patent Office
Office européen des brevets

(11) **EP 3 011 274 B1**

(12) **EUROPÄISCHE PATENTSCHRIFT**

(45) Veröffentlichungstag und Bekanntmachung des Hinweises auf die Patenterteilung:
**03.05.2017 Patentblatt 2017/18**

(21) Anmeldenummer: **14728871.6**

(22) Anmeldetag: **27.05.2014**

(51) Int Cl.:
***G01C 21/34*** *(2006.01)*

(86) Internationale Anmeldenummer:
**PCT/EP2014/060908**

(87) Internationale Veröffentlichungsnummer:
**WO 2014/202347 (24.12.2014 Gazette 2014/52)**

(54) **VERFAHREN UND VORRICHTUNG ZUM ERMITTELN EINER ROUTE SOWIE KORREKTURWERTEN FÜR HEURISTIKWERTE**

METHOD AND APPARATUS FOR DETERMINING A ROUTE AS WELL AS CORRECTION VALUES FOR HEURISTIC VALUES

PROCÉDÉ ET DISPOSITIF POUR DÉTERMINER UND ROUTE AINSI QUE DES VALEURS DE CORRECTION POUR DES VALEURS HEURISTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.06.2013 DE 102013211602**

(43) Veröffentlichungstag der Anmeldung:
**27.04.2016 Patentblatt 2016/17**

(73) Patentinhaber: **Bayerische Motoren Werke Aktiengesellschaft**
**80809 München (DE)**

(72) Erfinder: **TAVA, Marcello**
**81369 München (DE)**

(56) Entgegenhaltungen:
**DE-A1-102008 027 957**

**Beschreibung**

Die Erfindung betrifft ein Verfahren und eine Vorrichtung zum Ermitteln einer Route für ein Navigationssystem und/oder ein Fahrerassistenzsystem. Ferner betrifft die Erfindung ein Verfahren zum Ermitteln von Korrekturwerten für einen Routenberechnungsalgorithmus sowie ein System, das die Vorrichtung zum Ermitteln der Route umfasst.

In Fahrzeugnavigationssystemen wird zur Routenberechung in vielen Fällen der sogenannte A*-Algorithmus genutzt. Dieser Algorithmus dient der Berechnung eines kürzesten Pfades zwischen einem Startknoten und einem oder mehreren beliebigen Knoten in einem Graphen mit positivem Kantengewicht. In der Graphentheorie ist ein Graph eine Menge von Punkten, wobei die Punkte teilweise durch sogenannte Kanten miteinander verbunden sind. Die Punkte werden auch Knoten genannt. Die Kanten werden auch als Linien oder Verbindungen bezeichnet. Die Form der Punkte und Kanten spielt in der Graphentheorie keine Rolle. Als Kantengewicht wird in der Graphentheorie eine der jeweiligen Kante zugeordnete reelle Zahl bezeichnet. Die reelle Zahl kann beispielsweise eine Entfernung oder eine Zeitdauer oder einen Benzinverbrauch repräsentieren.

Der A*-Algorithmus nutzt eine Schätzfunktion (Heuristik), um zielgerichtet zu suchen und damit die Laufzeit zu verringern. Im Falle, dass die Schätzfunktion die realen Strecken- und/oder Wegeverhältnisse eines Gebiets nicht ausreichend genau abbildet, kann es jedoch vorkommen, dass die Berechnung der optimalen Route sehr lange dauert.

Das Dokument DE 10 2008 027957 A1 offenbart ein Routingverfahren zur Berechnung einer Route zwischen einem ersten Routenendpunkt und einem zweiten Routenendpunkt unter Verwendung einer elektronisch gespeicherten Straßenkarte basierend auf einer Gesamtkostenberechnung.

Die Aufgabe, die der Erfindung zu Grunde liegt, ist es, ein Verfahren und eine Vorrichtung zum Ermitteln einer Route, ein Verfahren zum Ermitteln von Korrekturwerten für einen Routenberechnungsalgorithmus sowie ein System zu schaffen, die einen Beitrag leisten, eine Effizienz der Routenermittlung zu erhöhen, insbesondere die Routenermittlung zu beschleunigen.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich gemäß einem ersten und zweiten Aspekt aus durch ein Verfahren und eine korrespondierende Vorrichtung zum Ermitteln einer Route für ein Navigationssystem und/oder ein Fahrerassistenzsystem. Dem Navigationssystem und/oder Fahrerassistenzsystem ist zumindest eine Speichereinheit zum Speichern von digitalen Kartendaten für ein Streckennetz und/oder Wegenetz eines vorgegebenen Gebiets zugeordnet. Hierbei umfassen die digitalen Kartendaten jeweilige Knoten des Gebiets und Verbindungen zwischen den jeweiligen Knoten des Gebiets. Ferner umfassen die digitalen Kartendaten jeweilige Kantenkosten für die jeweiligen Verbindungen der Knoten und vorgegebene Korrekturwerte für die jeweiligen Knoten. Die Route von einem vorgegebenen Ausgangsknoten zu einem vorgegebenen Zielknoten wird ermittelt abhängig von den in der Speichereinheit gespeicherten digitalen Kartendaten derart, dass für eine mögliche Expansion eines jeweiligen aktuellen Knotens für den aktuellen Knoten Gesamtkosten ermittelt werden abhängig von einer Summe von Kantenkosten einer optimalen Route vom Ausgangsknoten bis zum aktuellen Knoten und einem zielknotenbezogenen Heuristikwert für den aktuellen Knoten, der jeweils geschätzte Kosten von dem aktuellen Knoten zu dem Zielknoten repräsentiert, und einem vorgegebenen zielknotenbezogenen Korrekturwert. Der zielknotenbezogene Korrekturwert ist hierbei repräsentativ für einen Mittelwert von Kostenverhältnissen jeweiliger Knoten einer vorgegebenen Menge, wobei die jeweiligen Kostenverhältnisse abhängig sind von den Kantenkosten der Verbindungen, die zwischen dem aktuellen Knoten und dem jeweiligen Knoten der Menge liegen und die eine optimale Route zwischen dem aktuellen Knoten und diesem Knoten der Menge repräsentieren, und einem Heuristikwert des aktuellen Knotens in Bezug auf diesen jeweiligen Knoten der Menge.

Daten zu der ermittelten Route können an das Navigationssystem weitergeleitet werden zur optischen und/oder akustischen Signalisierung der ermittelten Route, beispielsweise auf einem Display, und/oder zum Ermitteln und Ausgeben von Fahrhinweisen. Zusätzlich oder alternativ können die Daten an das Fahrerassistenzsystem weitergeleitet werden, wobei das vorgegebene Fahrerassistenzsystem ausgebildet ist, vorgegebene Fahrzeugfunktionen eines Fahrzeugs abhängig von den ermittelten Daten der Route zu steuern.

Das jeweilige Kostenverhältnis ist ein direktes Maß für eine Abweichung zwischen dem Heuristikwert des aktuellen Knotens in Bezug auf den jeweiligen Knoten der Menge und der Summe der Kantenkosten einer optimalen Route von dem aktuellen Knotens zu dem jeweiligen Knoten der Menge.

Der zielknotenbezogene Heuristikwert kann beispielsweise mit dem zielknotenbezogenen Korrekturwert bewertet werden. Beispielsweise kann, wenn der zielknotenbezogene Heuristikwert die realen Strecken- und/oder Wegeverhältnisse des Gebiets nicht ausreichend genau abbildet, der zielknotenbezogene Heuristikwert einen zu kleinen Wert aufweisen. Durch die Bewertung mit dem zielknotenbezogenen Korrekturwert kann dieser zumindest zum Teil kompensiert werden. Im Vergleich zu der Ermittlung der Route ohne Korrekturwerte kann bei Nutzung der Korrekturwerte die optimale Route mit wesentlich weniger Berechnungsschritten ermittelt werden.

Die Mengen an Knoten, für die jeweiligen Korrekturwerte vorgegeben sind, können je nach Bedarf eine unterschiedliche Anzahl von Knoten umfassen. So kann ein zusätzlich benötigter Bedarf an Speicherplatz für das Speichern der Korrekturwerte geeignet gering gehalten werden.

Die Kantenkosten und die geschätzten Kosten weisen eine vorgegebene Korrespondenz auf. Die Kantenkosten repräsentieren einen Wert einer Gewichtungsfunktion. Die Gewichtungsfunktion gewichtet jeweilige Einzelkantenkosten der jeweiligen Verbindung, beispielsweise Streckenlängenkosten und/oder Fahrtdauerkosten, auf eine vorgegebene Weise. Die geschätzten Kosten repräsentieren den Wert einer Schätzfunktion, die geschätzte Einzelkosten, beispielsweise geschätzte Streckenlängenrestkosten von einem aktuellen Knoten bis zum Zielknoten und/oder geschätzte Fahrdauerrestkosten von dem aktuellen Knoten bis zum Zielknoten, in einer analogen vorgegebenen Weise gewichtet wie die Gewichtungsfunktion. In einem vereinfachten Fall können die Kantenkosten beispielsweise die Streckenlängenkosten der jeweiligen Verbindung repräsentieren und die geschätzten Kosten können beispielsweise die geschätzten Streckenlängenrestkosten, zum Beispiel die Euklidische Distanz, zwischen dem aktuellen Knoten und dem Zielknoten repräsentieren.

Die optimale Route ist optimal in Bezug auf die Kantenkosten.

Die zielknotenbezogenen Korrekturwerte sind zumindest eine Untermenge der vorgegebenen Korrekturwerte.

Das Expandieren eines Knotens bedeutet, dass ausgehend von diesem Knoten die Gesamtkosten weiterer Knoten ermittelt werden, die eine Verbindung zu diesem Knoten aufweisen.

Die Ermittlung der Route kann beispielsweise gemäß einem A*-Algorithmus erfolgen. Bei dem A*-Algorithmus wird jeweils der Knoten, der die niedrigsten Gesamtkosten aufweist, als nächstes expandiert. Für die Entscheidung, ob der aktuelle Knoten im nächsten Schritt expandiert wird, werden die Gesamtkosten des aktuellen Knotens ermittelt und mit den Gesamtkosten weiterer möglicher Expansionsknoten verglichen.

In einer vorteilhaften Ausgestaltung des ersten und des zweiten Aspekts umfassen die digitalen Kartendaten die jeweiligen Positionen der Knoten und der zielknotenbezogene Heuristikwert wird ermittelt abhängig von der Position des aktuellen Knotens und der Position des Zielknotens. Vorteilhafterweise kann so eine Speicherkapazität der Speichereinheit gering gehalten werden.

In einer weiteren vorteilhaften Ausgestaltung des ersten und des zweiten Aspekts umfassen die digitalen Kartendaten vorgegebene Heuristikwerte für die jeweiligen Knoten in Bezug auf die jeweils anderen Knoten des Gebiets, die jeweils geschätzte Kosten von dem jeweils einen Knoten zu dem jeweils anderen Knoten repräsentieren, und der zielkontenbezogene Heuristikwert ist somit vorgegeben. Vorteilhafterweise ermöglicht dies, Rechenkapazität einzusparen, da die zielknotenbezogenen Heuristikwerte im Vorfeld und damit unabhängig vor einer aktuellen Routenberechnung ermittelt werden können.

In einer weiteren vorteilhaften Ausgestaltung des ersten und des zweiten Aspekts repräsentiert der jeweilige zielknotenbezogene Heuristikwert die Euklidische Distanz zwischen dem aktuellen Knoten und dem Zielknoten. Vorteilhafterweise können so die zielknotenbezogenen Heuristikwerte sehr einfach ermittelt werden, insbesondere stehen die erforderlichen Daten in der Speichereinheit bereits zur Verfügung. Ferner ist die Euklidische Distanz zum Ziel eine monotone Schätzfunktion (Heuristik) und erfüllt somit insbesondere die Zuverlässigkeitsvoraussetzung für den A*-Algorithmus.

In einer weiteren vorteilhaften Ausgestaltung des ersten und zweiten Aspekts repräsentiert der Heuristikwert des aktuellen Knotens in Bezug auf den jeweiligen Knoten der Menge die Euklidische Distanz zwischen dem aktuellen Knoten und diesem jeweiligen Knoten der Menge. Vorteilhafterweise können so die Heuristikwerte sehr einfach ermittelt werden.

In einer weiteren vorteilhaften Ausgestaltung des ersten und zweiten Aspekts ist das Gebiet in mehrere Segmentbereiche unterteilt und die vorgegebene Menge von Knoten umfasst ausgewählte Knoten, die in einem Zielknotensegmentbereich angeordnet sind, der zumindest den Zielknoten umfasst. Vorteilhafterweise ermöglicht dies, die Korrekturwerte mit ausreichender Genauigkeit vorzugeben, so dass die Routenermittlung effizienter erfolgen kann. Die vorgegebene Menge von Knoten kann alternativ auch alle Knoten, die in einem zielknotensegmentbereich angeordnet sind, umfassen. Die ausgewählten Knoten können beispielsweise stochastisch ausgewählt werden und/oder abhängig von zumindest einer vorgegebenen Regel.

In einer weiteren vorteilhaften Ausgestaltung des ersten und zweiten Aspekts repräsentiert der Mittelwert der Kostenverhältnisse der Knoten der Menge einen arithmetischen Mittelwert der Kostenverhältnisse. Dies hat den Vorteil, dass die jeweiligen Korrekturwerte einfach bereitgestellt werden können.

In einer weiteren vorteilhaften Ausgestaltung des ersten und zweiten Aspekts umfasst der jeweilige Segmentbereich des Gebiets einen vorgegebenen Radiusbereich ausgehend von dem aktuellen Knoten und einen vorgegebenen Winkelbereich um den aktuellen Knoten. Dies hat den Vorteil, dass die jeweiligen Korrekturwerte einfach bereitgestellt werden können.

Die Erfindung zeichnet sich gemäß einem dritten Aspekt aus durch ein Verfahren zum Ermitteln von Korrekturwerten für einen Routenberechnungsalgorithmus auf Basis von digitalen Kartendaten für ein Streckennetz und/oder Wegenetz eines vorgegebenen Gebiets. Hierbei umfassen die digitalen Kartendaten jeweilige Knoten des Gebiets und Verbindungen zwischen den jeweiligen Knoten des Gebiets. Ferner umfassen die digitalen Kartendaten jeweilige Kantenkosten für die jeweiligen Verbindungen der Knoten. Für zumindest einen Teil der Knoten des Gebietes wird für den jeweiligen Knoten zumindest eine Bezugsmenge von Knoten vorgegeben. Für die jeweilig vorgegebene Bezugsmenge von Knoten wird ein Kostenverhältnis für den jeweiligen Knoten der Bezugsmenge ermittelt. Dieses Kostenverhältnis wird ermittelt abhängig von den Kantenkosten der Verbindungen, die zwischen dem Knoten, für den der Korrekturwert ermittelt wird, und dem jeweiligen Knoten der Bezugsmenge liegen und die eine optimale Route zwischen dem Knoten, für den der Korrekturwert ermittelt wird, und dem Knoten der Bezugsmenge repräsentieren, und dem Heuristikwert des Knotens, für den der Korrekturwert ermittelt wird in Bezug auf den Knoten der Bezugsmenge. Ein Mittelwert wird ermittelt abhängig von den ermittelten Kostenverhältnissen der Knoten dieser Bezugsmenge und abhängig von dem Mittelwert wird der jeweilige Korrekturwert ermittelt.

Vorteilhafte Ausgestaltungen des ersten und zweiten Aspekts gelten hierbei auch für den dritten Aspekt.

Die Ermittlung der Korrekturwerte kann vorteilhafterweise unabhängig von einer aktuellen Routenermittlung erfolgen, beispielsweise während einer Kartenkompilierung.

Der Heuristikwert wird mittels einer Schätzfunktion, die auch Heuristik genannt wird, ermittelt. Die Schätzfunktion kann beispielsweise eine Funktion umfassen zum Ermitteln eines kürzesten Abstands zweier Punkte in einem vorgegebenen zweidimensionalen Koordinatensystem (Euklidische Distanz). Für den A*-Algorithmus ist Vorraussetzung, dass die Schätzfunktion zulässig ist. Die Schätzfunktion ist zulässig, wenn der jeweilige Heuristikwert die jeweilige Summe der Kantenkosten der Verbindungen der optimalen Route zwischen zwei zu betrachtenden Knoten nicht übersteigt. Das heißt, der jeweilige Heuristikwert muss stets im Intervall [0;w] liegen, wenn w jeweils die Summe der Kantenkosten der Verbindungen der optimalen Route zwischen den zwei zu betrachtenden Knoten bezeichnet.

Die jeweiligen Korrekturwerte können daher bei Bedarf abhängig von angepassten Mittelwerten ermittelt werden, so dass sichergestellt werden kann, dass die Zulässigkeitsvoraussetzungen des A*-Algorithmus auch erfüllt sind bei Nutzung der Korrekturwerte. Beispielsweise können die jeweiligen Mittelwerte dadurch angepasst werden, dass sie dividiert werden mit einem vorgegebenen Faktor, der größer als 1 ist.

In einer vorteilhaften Ausgestaltung des dritten Aspekts umfassen die digitalen Kartendaten die jeweiligen Positionen der Knoten und der Heuristikwert des Knotens, für den der Korrekturwert ermittelt wird, in Bezug auf den jeweiligen Knoten der Bezugsmenge wird ermittelt abhängig von der Position des Knotens, für den der Korrekturwert ermittelt wird, und der Position des jeweiligen Knotens der Bezugsmenge. Vorteilhafterweise ermöglicht dies, Speicherkapazität einzusparen.

In einer weiteren vorteilhaften Ausgestaltung des dritten Aspekts umfassen die digitalen Kartendaten vorgegebene Heuristikwerte für die jeweiligen Knoten in Bezug auf die jeweils anderen Knoten des Gebiets, die jeweils geschätzte Kosten von dem jeweils einen Knoten zu dem jeweils anderen Knoten repräsentieren, und der Heuristikwert des Knotens, für den der Korrekturwert ermittelt wird, in Bezug auf den jeweiligen Knoten der Bezugsmenge ist somit vorgeben. Vorteilhafterweise ermöglicht dies, Rechenkapazität bei der Berechnung der Korrekturwerte einzusparen.

In einer weiteren vorteilhaften Ausgestaltung des dritten Aspekts repräsentiert der Heuristikwert des Knotens, für den der Korrekturwert ermittelt wird in Bezug auf den Knoten der Bezugsmenge, die Euklidische Distanz zwischen dem Knoten, für den der Korrekturwert ermittelt wird, und dem Knoten der Bezugsmenge. Dies ermöglicht eine einfaches Ermitteln der Korrekturwerte.

In einer weiteren vorteilhaften Ausgestaltung des dritten Aspekts ist das Gebiet ausgehend von dem jeweiligen Knoten, für den die Korrekturwerte berechnet werden, in mehrere Segmentbereiche unterteilt und ausgewählte Knoten der jeweiligen Segmentbereiche bilden jeweils eine der vorgegebenen Bezugsmengen von Knoten. Dies hat den Vorteil, dass die jeweiligen Korrekturwerte einfach ermittelt werden können. Die jeweilige vorgegebene Bezugsmenge kann alternativ auch alle Knoten, die in dem jeweiligen Segmentbereich angeordnet sind, umfassen. Die ausgewählten Knoten können beispielsweise stochastisch ausgewählt werden und/oder abhängig von zumindest einer vorgegebenen Regel. Sämtlichen Knoten, die in dem jeweiligen Segmentbereich angeordnet sind, werden die Korrekturwerte zugeordnet, die für diesen jeweiligen Segmentbereich ermittelt wurden.

In einer weiteren vorteilhaften Ausgestaltung des dritten Aspekts umfassen die vorgegebenen Segmentbereiche des Gebiets jeweils einen vorgegebenen Radiusbereich ausgehend von dem jeweiligen Knoten, für den die Korrekturwerte ermittelt werden, und einen vorgegebenen Winkelbereich um diesen Knoten, für den die Korrekturwerte ermittelt werden. Dies hat den Vorteil, dass die jeweiligen Korrekturwerte einfach ermittelt werden können.

Gemäß einem vierten Aspekt zeichnet sich die Erfindung aus durch ein System, das eine Speichereinheit und eine Vorrichtung gemäß dem zweiten Aspekt aufweist und bei dem in der Speichereinheit digitale Kartendaten für ein Streckennetz und/oder Wegenetz eines vorgegebenen Gebiets gespeichert sind. Die Vorrichtung ist mit der Speichereinheit signaltechnisch gekoppelt und ausgebildet, die digitalen Kartendaten aus der Speichereinheit auszulesen. Hierbei umfassen die digitalen Kartendaten jeweilige Knoten des Gebiets und Verbindungen zwischen den jeweiligen Knoten des Gebiets. Des Weiteren umfassen die digitalen Kartendaten vorgegebene Korrekturwerte für die jeweiligen Knoten.

Vorteilhafte Ausgestaltungen des ersten und zweiten Aspekts gelten hierbei auch für den vierten Aspekt.

Ausführungsbeispiele der Erfindung sind im Folgenden anhand der schematischen Zeichnungen erläutert.

Es zeigen:

Figur 1          ein Ablaufdiagramm für ein erstes Programm zum Ermitteln von Korrekturwerten für einen Routenermittlungsalgorithmus,

Figur 2a bis 2c      Graphiken zur Veranschaulichung der Korrekturwertermittlung,

Figur 3          ein weiteres Ausführungsbeispiel für eine Aufteilung eines Gebiets in Segmentbereiche,

Figur 4a bis 4c      Graphiken zur Veranschaulichung der Routenermittlung unter Zuhilfenahme der Korrekturwerte,

Figur 5          ein Blockschaltbild für ein System und

Figur 6a bis 6c      Graphiken zur Veranschaulichung einer Routenermittlung mit dem A*-Algorithmus gemäß dem Stand der Technik.

Elemente gleicher Konstruktion oder Funktion sind figurenübergreifend mit den gleichen Bezugszeichen versehen.

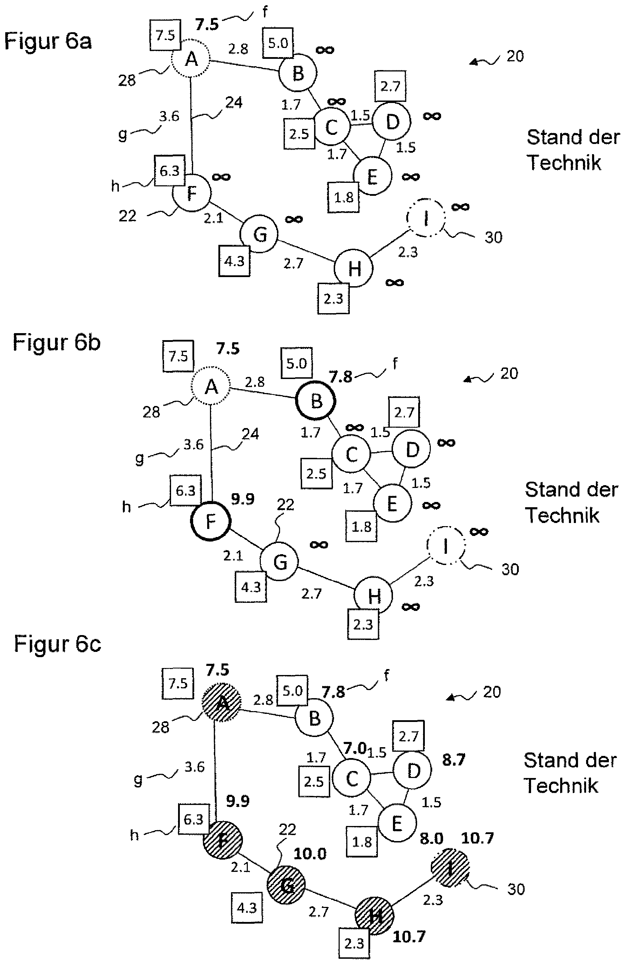

Die Figuren 6a bis 6c zeigen jeweils einen Graph für ein vorgegebenes Gebiet 20 zur Ermittlung einer Route von einem Ausgangsknoten 28 zu einem Zielknoten 30. Der Graph weist Knoten 22 und Kanten, die auch Verbindungen 24 genannt werden, auf. Die in den Figuren 6a bis 6c gezeigten Graphiken dienen der Veranschaulichung einer Ermittlung einer optimalen Route mit dem A*-Algorithmus gemäß dem Stand der Technik. Die optimale Route ist hierbei optimal in Bezug auf die Kantenkosten, beispielsweise am schnellsten oder am kürzesten oder am einfachsten.

In den Figuren 6a bis 6c sind den Knoten 22 zur einfacheren Unterscheidung Namen in Form von Großbuchstaben des lateinischen Alphabets zugeordnet. Der Ausgangsknoten 28 weist den Buchstaben A auf und wird im Folgenden auch A-Knoten genannt. Der Zielknoten 30 weist den Buchstaben I auf und wird im Folgenden auch I-Knoten genannt.

Die in den Figuren 6a bis 6c gezeigten normal gedruckten Zahlen, die neben den Verbindungen 24 angeordnet sind, repräsentieren jeweilige Kantenkosten g, zum Beispiel eine Streckendistanz zwischen den beiden Knoten 22, die die Verbindung 24 verbindet. Jedem Knoten 22 des Graphen ist ein zielknotenbezogener Heuristikwert h zugeordnet. Der zielknotenbezogene Heuristikwert h repräsentiert geschätzte Kosten bezogen auf den jeweiligen Knoten 22 und den Zielknoten 30.

In den Figuren 6a bis 6c ist der jeweilige zielknotenbezogene Heuristikwert h für den jeweiligen Knoten 22 in einem Kästchen neben dem jeweiligen Knoten 22 eingetragen. Die in den Figuren 6a bis 6c gezeigten zielknotenbezogenen Heuristikwerte h repräsentieren jeweils die Euklidische Distanz von dem jeweiligen Knoten 22 zu dem Zielknoten 30.

Bei dem A*-Algorithmus werden immer die Knoten 22 zuerst untersucht, die wahrscheinlich schnell zum Zielknoten 30 führen.

Ausgehend von dem Ausgangsknoten 28 werden für die Knoten 22, die eine Verbindung 24 zu dem Ausgangsknoten 28 aufweisen, Gesamtkosten f ermittelt. In dem in Figur 6b gezeigten Beispiel sind das der B-Knoten und der F-Knoten.

Der Knoten 22, der die niedrigsten Gesamtkosten f aufweist, wird als nächstes expandiert, das heißt ausgehend von diesem Knoten 22 werden die Gesamtkosten f der Knoten 22 ermittelt, die eine Verbindung 24 zu diesem Knoten 22 aufweisen.

Die Gesamtkosten f sind hierbei die Summe der Kantenkosten g einer optimalen Route vom Ausgangsknoten 28 bis zum aktuellen Knoten 22a, im Folgenden auch kumulative Kantenkosten genannt, plus dem zielknotenbezogenen Heuristikwert h. Die Gesamtkosten können gemäß der Formel in Gl.1

$$f(x) = cum(x) + h(x) \hspace{3cm} Gl. 1$$

ermittelt werden, wobei cum(x) die kumulativen Kantenkosten und h(x) den zielknotenbezogenen Heuristikwert h repräsentiert für einen Knoten x.

Für den B-Knoten ergibt sich bezogen auf den Ausgangsknoten 28, in diesem Fall der A-Knoten, mit den in Figur 6a beispielhaft angegebenen Zahlenwerten für die Gesamtkosten f

$$f(B,I) = cum(A,B) + h(B,I) = g(A,B) + h(B,I) = 2,8 + 5 = 7,8$$

und für den F-Knoten

$$f(F,I) = cum(A,F) + h(F,I) = g(A,F) + h(F,I) = 3,6 + 6,3 = 9,9.$$

Hierbei repräsentiert g(x,y) die Kantenkosten g des Knoten x bezogen auf seinen Nachbarknoten y, der bezogen auf die optimale Route ein direkter Vorgängerknoten ist.

In diesem Fall weist der B-Knoten die geringeren Gesamtkosten f auf und wird daher als nächstes expandiert.

Für den C-Knoten ergeben sich mit den in Figur 6a beispielhaft angegebenen Zahlenwerten folgende Gesamtkosten f:

$$f(C,I) = cum(A,C) + h(C,I) = g(A,B) + g(B,C) + h(C,I) = 7,00$$

Die Gesamtkosten f für den jeweiligen Knoten 22 sind in Figur 6c jeweils fettgedruckt neben den Knoten 22 gezeigt. Knoten 22, für die noch keine Gesamtkosten f ermittelt wurden, wird, wie in Figur 6a und 6b gezeigt, zunächst der Wert Unendlich zugewiesen.

Wie in Figur 6a bis 6c zu erkennen ist, weist weder der C-Knoten, noch der D-Knoten noch der E-Knoten eine Verbindung 24 zu dem Zielknoten 30 auf. Um von dem E-Knoten zum I-Knoten zu kommen, müssen sämtliche Knoten, der C-, B-, A-, F-, G-, und H-Knoten, durchlaufen werden. Solch ein Fall kann beispielsweise auftreten, wenn sich in einem realen Landschaftsgebiet ein Fluss und/oder Eisenbahnschienen und/oder ein anderes nicht überwindbares Hindernis zwischen dem E-Knoten und dem I-Knoten befindet. In diesem Fall bildet die gewählte Heuristikfunktion die realen Strecken- und/oder Wegeverhältnisse des Gebiets 20 nicht ausreichend genau ab und ein Ermitteln der optimalen Route benötigt mehr Rechenschritte und dauert daher länger.

Die Expansion wird in dem in Figur 6a bis 6c gezeigten Fall ausgehend von dem F-Knoten fortgesetzt. Die optimale Route verläuft vom A-Knoten über den F-, G-, und H-Knoten zum I-Knoten.

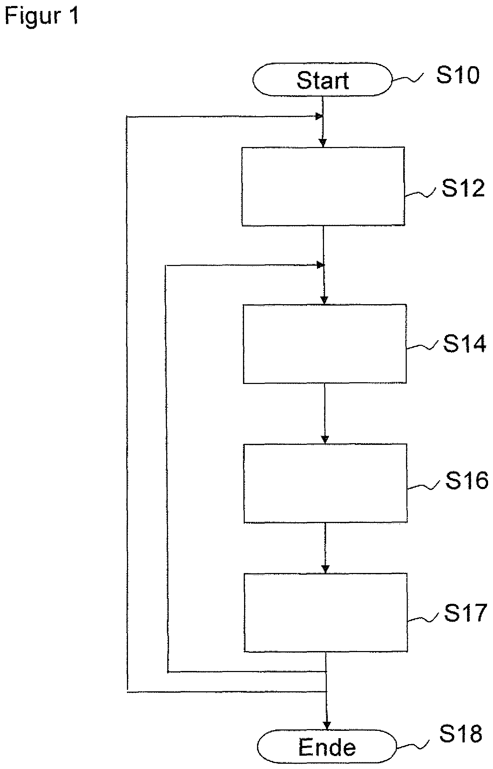

Figur 1 zeigt ein beispielhaftes Ablaufdiagramm eines ersten Programms zum Ermitteln von Korrekturwerten, die für einen Routenermittlungsalgorithmus, wie beispielsweise für den A*-Algorithmus, genutzt werden können.

Die Korrekturwerte werden auf Basis von digitalen Kartendaten für ein Streckennetz und/oder Wegenetz eines vorgegebenen Gebiets 20 ermittelt. Die digitalen Kartendaten umfassen jeweilige Knoten 22 des Gebiets 20 und Verbindungen 24 zwischen den jeweiligen Knoten 22 des Gebiets 20. Ferner umfassen die digitalen Kartendaten jeweilige Kantenkosten g für die jeweiligen Verbindungen 24 der Knoten 22.

In dem in Figur 1 gezeigten Ablaufdiagramm wird das erste Programm in einem Schritt S10 gestartet.

In einem Schritt S12 wird für einen selektierten Knoten, für den Korrekturwerte ermittelt werden sollen, zumindest eine Bezugsmenge von Knoten 22 vorgegeben. Vorzugsweise werden hierbei mehrere Bezugsmengen für den selektierten Knoten vorgegeben.

In einem Schritt S14 wird für jeden der Knoten 22 der zumindest einen Bezugsmenge ein Kostenverhältnis Cost in Bezug auf den selektierten Knoten ermittelt. Dieses Kostenverhältnis Cost wird ermittelt abhängig von den Kantenkosten g der Verbindungen 24, die zwischen dem selektierten Knoten und dem jeweiligen Knoten 22 der Bezugsmenge liegen und die eine optimale Route zwischen den beiden Knoten repräsentieren, und einem Heuristikwert, der sich auf die beiden Knoten bezieht.

Hierzu können die digitalen Kartendaten die jeweiligen Positionen der Knoten umfassen und der Heuristikwert des selektierten Knotens in Bezug auf den jeweiligen Knoten der Bezugsmenge kann jeweils ermittelt werden abhängig von der Position des selektierten Knoten und der Position des jeweiligen Knotens der Bezugsmenge. Hierbei kann der jeweilige Heuristikwert des selektieren Knotens in Bezug auf den jeweiligen Knoten der Bezugsmenge beispielsweise die Euklidische Distanz repräsentieren zwischen dem selektierten Knoten und dem jeweiligen Knoten der Bezugsmenge.

In einem Schritt S16 wird ein Mittelwert ermittelt abhängig von den ermittelten Kostenverhältnissen Cost der Knoten 22 dieser zumindest einen Bezugsmenge.

In einem Schritt S17 wird der Korrekturwert für den selektierten Knoten bezogen auf die Knoten 22 dieser Bezugsmenge abhängig von dem Mittelwert ermittelt. Der Mittelwert kann hierbei direkt dem Korrekturwert zugeordnet werden oder der Mittelwert kann durch einen Faktor, der größer als eins ist, dividiert werden, und dann dem Korrekturwert zugeordnet werden.

Ausgehend von dem Schritt S17 wird das Programm in dem Schritt S14 fortgesetzt, bis für sämtliche Bezugsmengen des selektierten Knotens die Korrekturwerte ermittelt sind.

Ist die Berechnung der Korrekturwerte für den selektierten Knoten abgeschlossen, wird ein weiterer Knoten 22 des Gebiets 20 ausgewählt und das erste Programm ausgehend von dem Schritt S12 erneut durchlaufen.

Das erste Programm wird in einem Schritt S18 beendet, wenn für zumindest einen gewünschten Teil der Knoten 22 des Gebiets 20 jeweils die Korrekturwerte ermittelt sind.

Die einzelnen Programmschritte können alternative zumindest teilweise auch in einer anderen, als in dem in Figur 1 angegebenen Reihenfolge, ausgeführt werden.

Vorteilhafterweise können die Korrekturwerte unabhängig von einer aktuellen Routenermittlung ermittelt werden. Die Ermittlung der Korrekturwerte kann einmalig ausgeführt werden, insofern keine größeren Änderungen bezüglich der Knoten 22 und Verbindungen 24 in dem vorgegebenen Gebiet 20 auftreten. Dies hat insbesondere den Vorteil, dass sehr leistungsfähige Recheneinheiten zum Ermitteln genutzt werden können. Beispielsweise kann ein Compiler genutzt werden, um Rohdaten zu dem Straßennetz und/oder Wegenetz des Gebiets 20 einzulesen und die für ein vorgegebenes Navigationssystem und/oder Fahrerassistenzsystem relevanten Daten zu selektieren und die Korrekturwerte zu berechnen und diese Daten in einer kompilierten Datenbank geeignet zusammenzuführen und zu speichern.

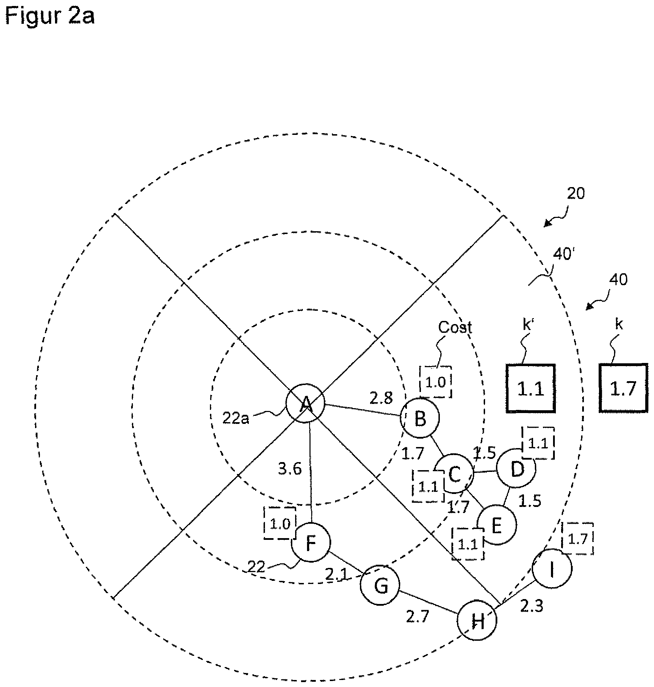

Die in Figur 2a bis 2c gezeigten Graphiken veranschaulichen beispielhaft die Ermittlung der Korrekturwerte. Ausgangspunkt sind hierbei die in den Figuren 6a bis 6c gezeigten Graphen. Die Graphen repräsentieren hierbei jeweils beispielhaft das Streckennetz und/oder Wegenetz des vorgegebenen Gebiets 20.

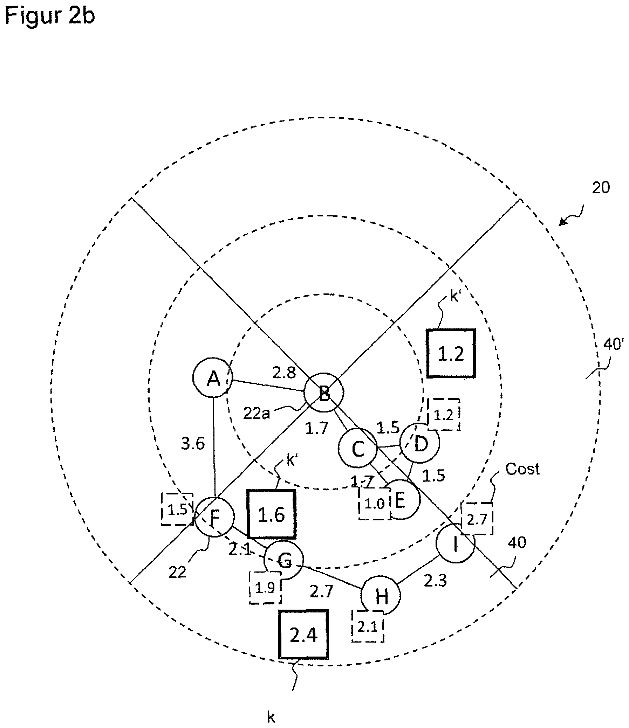

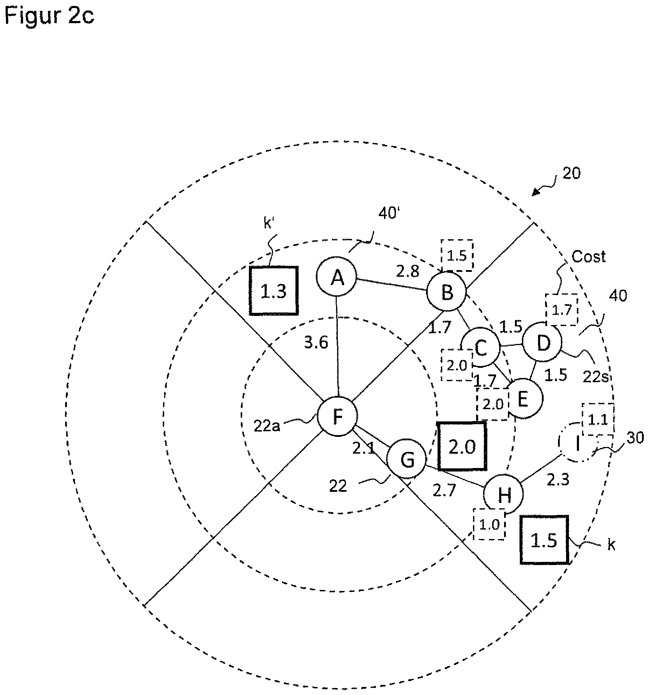

Figur 2a veranschaulicht hierbei beispielhaft die Vorgabe der Bezugsmengen von Knoten 22 für den A-Knoten, Figur 2b die Vorgabe der Bezugsmengen von Knoten 22 für den B-Knoten und Figur 2c die Vorgabe der Bezugsmengen von Knoten 22 für den F-Knoten.

Hierzu wird beispielsweise das Gebiet 20 in Segmentbereiche 40 unterteilt. Die Segmentbereiche 40 repräsentieren somit geografische Teilgebiete des Gebiets 20 und ausgewählte Knoten der jeweiligen Segmentbereiche 40 bilden jeweils eine der vorgegebenen Bezugsmengen von Knoten. Die jeweilige vorgegebene Bezugsmenge kann alternativ auch alle Knoten, die in dem jeweiligen Segmentbereich angeordnet sind, umfassen.

Bei den in den Figuren 2a bis 2c gezeigten Ausführungsbeispielen umfassen die vorgegebenen Segmentbereiche 40 des Gebiets 20 jeweils einen vorgegebenen Radiusbereich ausgehend von dem jeweiligen selektierten Knoten, für den die Korrekturwerte ermittelt werden, und einen vorgegebenen Winkelbereich um den selektierten Knoten. Das Gebiet 20 wird somit in konzentrische Kreissegmente bezogen auf den selektierten Knoten unterteilt.

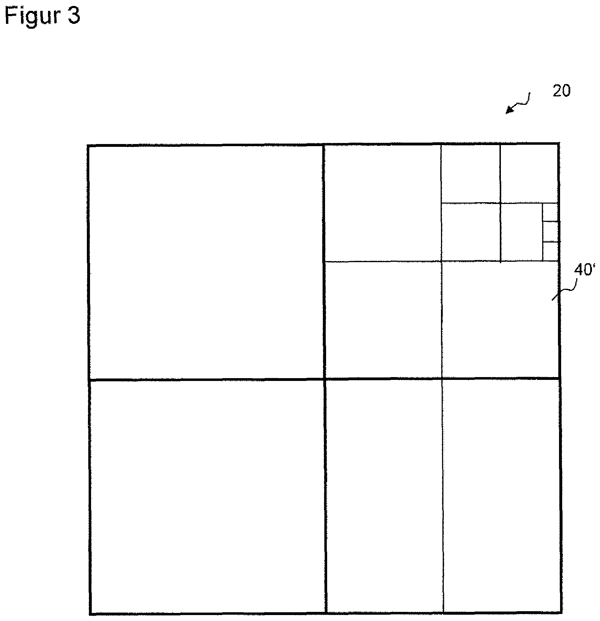

Die in den Figuren 2a bis 2c gezeigte Aufteilung des Gebiets 20 in Segmentbereiche 40 ist ein mögliches Ausführungsbeispiel. Insbesondere kann die Anzahl der Segmentbereiche 40 und deren Größe mit Bezug auf den jeweiligen Winkelbereich und den jeweiligen Radiusbereich unterschiedlich gewählt werden, zum Beispiel abhängig von einer möglichen Speicherkapazität einer Speichereinheit zum Speichern der digitalen Kartendaten, beispielsweise einer Datenbank für das Navigationssystem, und/oder abhängig von einer Anzahl von Zugriffen auf solch eine Speichereinheit sowie abhängig von den Anforderungen an die Zuverlässigkeit und die Effizienz des Routenermittlungsalgorithmus. Die Aufteilung des Gebiets 20 in Segmentbereiche 40 kann alternativ auch entlang von kartesischen Koordinaten, wie beispielsweise in Figur 3 gezeigt, erfolgen. Die Segmentbereiche 40 können unterschiedliche Größen aufweisen, beispielsweise können die Segmentbereiche 40 in städtischen Gebieten mit einer hohen Straßendichte kleiner gewählt werden als in ländlichen Gebieten mit einer relativ geringen Straßendichte.

Für einen ersten selektierten Knoten z, für den die Korrekturwerte ermittelt werden, und einen zweiten Knoten m, der der zumindest einen Bezugsmenge von Knoten 22 angehört, kann das Kostenverhältnis Cost gemäß einer Gl. 2 ermittelt werden:

$$\mathrm{Cost(z,m) \ = \ cum(z,m)/h(z,m),} \qquad\qquad \mathrm{Gl.2}$$

wobei cum(z,m) die Summe der Kantenkosten g einer optimalen Route vom dem ersten selektierten Knoten z zum Knoten dem zweiten Knoten m repräsentiert, der der zumindest einen Bezugsmenge von Knoten 22 angehört.

Für den B-Knoten ergibt sich bezogen auf den I-Knoten mit den Zahlen aus den Figuren 6b (Heuristikwert h) und 4b Figur (Kantenkosten g)

$$\mathrm{Cost(B,I) \ = \ cum(B,I)/h(B/I)}$$

$$\mathrm{= \ (g(A,B) \ + \ g(A,F) \ + \ g(F,G) \ + \ g(G,H) \ + \ g(H,I))/h(B,I)}$$

$$\mathrm{= \ (2,8 \ + \ 3,6 \ + \ 2,1 \ + \ 2,7 \ + \ 2,3)/5,0}$$

$$\mathrm{= \ 2,7.}$$

Der Korrekturwert für die Bezugsmenge von Knoten 22, die den I-Knoten umfasst, repräsentiert den Mittelwert sämtlicher Kostenverhältnisse Cost dieser Bezugsmenge. In dem in Figur 2b gezeigten Beispiel ist der Korrekturwert für das Segment, das den I-Knoten umfasst, gleich

$$k'(B,\{H,I\}) = (Cost(B,H) + Cost(B,I))/2$$
$$= (2,1 + 2,7)/2 = 2,4.$$

Für ein weiters Segment das den F-, G- und E-Knoten umfasst, ist der Korrekturwert gleich

$$k'(B,\{F,G,E\}) = (Cost(B,F) + Cost(B,G) + Cost(B,E))/3$$
$$= (1,5 + 1,9 + 1,0)/3 = 1,6.$$

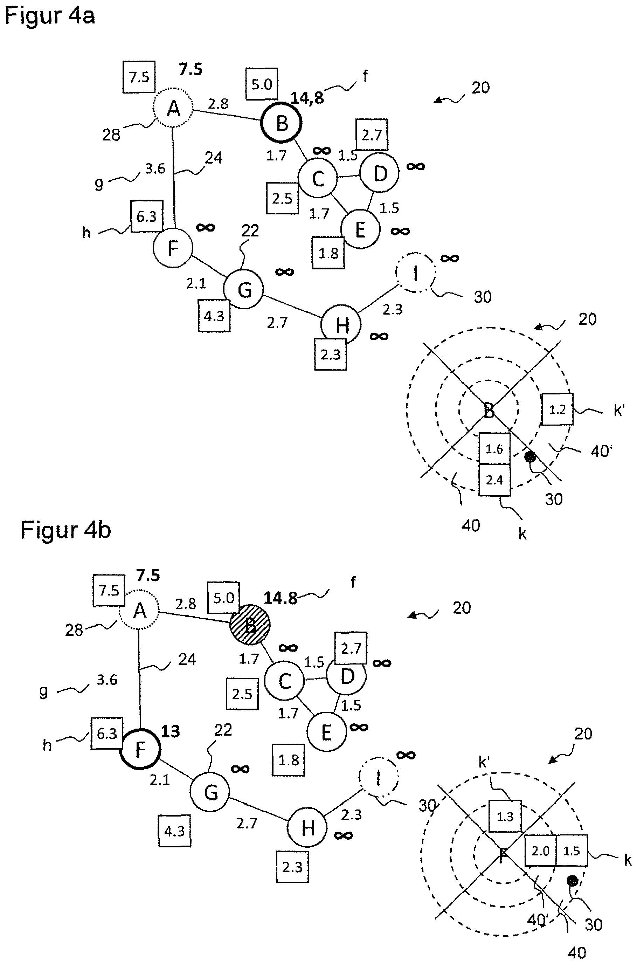

In den Figuren 2a bis 2c sind die Kostenverhältnisse Cost der einzelnen Knoten 22 in den kleinen Kästchen mit gestricheltem Rand angegeben und die jeweiligen Korrekturwerte in den großen Kästchen mit fett gedrucktem Rand.
Die Korrekturwerte für die anderen Knoten 22 können in analoger Weise ermittelt werden.
Die in den Figuren 4a bis 4c gezeigten Graphiken veranschaulichen die Ermittlung der Route abhängig von den Korrekturwerten.
Das Ermitteln der Route kann mittels eines geeignet ausgebildeten Programms abhängig von digitalen Kartendaten erfolgen, die die Daten umfassen, die auch für die Berechnung der Korrekturwerte genutzt werden und die die Korrekturwerte umfassen.
Das Programm kann von einer geeignet ausgebildeten Recheneinheit, die einen Programmspeicher aufweist, ausgeführt werden. Diese Recheneinheit kann auch Vorrichtung zum Ermitteln einer Route und/oder Routenermittlungseinrichtung genannt werden.
Die Route von einem vorgegebenen Ausgangsknoten 28 zu einem vorgegebenen Zielknoten 30 wird hierbei derart ermittelt, dass für eine mögliche Expansion eines jeweiligen aktuellen Knotens 22a für den aktuellen Knoten 22a die Gesamtkosten f ermittelt werden abhängig von der Summe der Kantenkosten g der optimalen Route vom Ausgangsknoten 28 bis zum aktuellen Knoten 22a und dem vorgegebenen zielknotenbezogenen Heuristikwert h für den aktuellen Knoten 22a und einem vorgegebenen zielknotenbezogenen Korrekturwert k.
Die Berechung der Gesamtkosten f für den Knoten x kann gemäß Gl. 3 erfolgen.

$$f(x) = cum(x) + h(x) * k(x) \hspace{3cm} Gl. 3$$

hierbei ist k(x) der auf den zielknotenbezogene Korrekurwert.
Für den B-Knoten ergeben sich bezogen auf den Zielknoten 30 gemäß Gl. 3 die folgenden Gesamtkosten f:

$$f(B,I) = cum(B,I) + h(B,I) * k(B,\{H,I\})$$
$$= g(A,B) + h(B,I) * k(B,\{H,I\})$$
$$= 2,8 + 5 * 2,4 = 14,8$$

Für den F-Knoten ergeben sich bezogen auf den Zielknoten 30 gemäß Gl. 3 die folgenden Gesamtkosten f:

$$f(F,I) = cum(F,I) + h(F,I) * k(F,\{H,E,D,I\})$$
$$= g(A,F) + h(F,I) * k(F,\{H,E,D,I\})$$
$$= 3,6 + 6,3 * 1,5 = 13,1$$

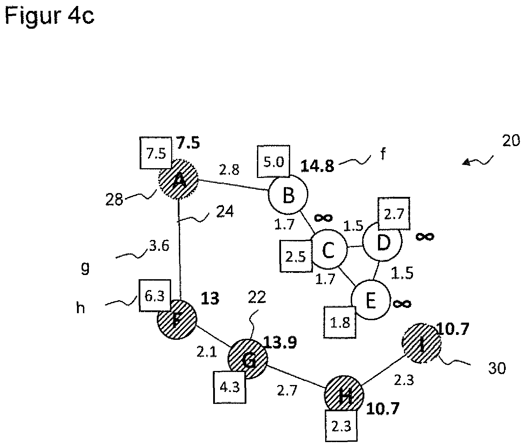

In diesem Fall weist der F-Knoten die geringeren Gesamtkosten f auf und wird daher als nächstes expandiert.
Die Gesamtkosten f für den jeweiligen Knoten 22 sind in Figur 4c jeweils fettgedruckt neben dem Knoten 22 gezeigt.
Die optimale Route verläuft vom A-Knoten über den F-, G-, und H-Knoten zum I-Knoten. Im Vergleich zu der Ermittlung der Route ohne Korrekturwerte wird in diesem Falle die optimale Route mit wesentlich weniger Berechnungsschritte ermittelt.

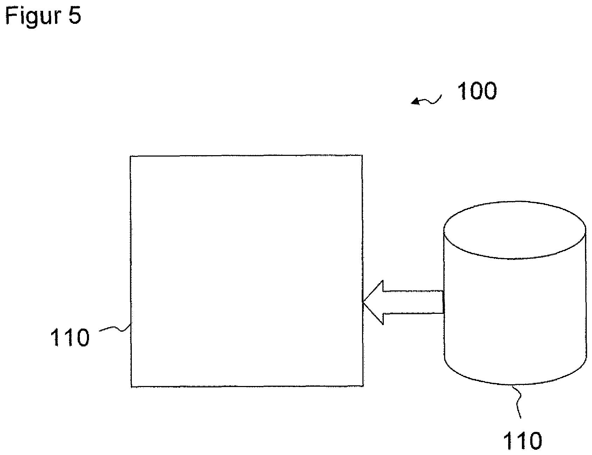

Figur 5 zeigt ein System, das die Speichereinheit und die Vorrichtung zum Ermitteln der Route umfasst. In der Speichereinheit sind die digitalen Kartendaten für das Streckennetz und/oder Wegenetz des vorgegebenen Gebiets 20 gespeichert. Die Vorrichtung ist mit der Speichereinheit signaltechnisch gekoppelt und ausgebildet, die digitalen Kartendaten aus der Speichereinheit auszulesen. Hierbei umfassen die digitalen Kartendaten die jeweiligen Knoten 22 des Gebiets 20 und die Verbindungen 24 zwischen den jeweiligen Knoten 22 des Gebiets 20. Ferner umfassen die digitalen Katendaten die jeweiligen Kantenkosten g für die jeweiligen Verbindungen 24 der Knoten 22 und die vorgegebenen Heuristikwerte für die jeweiligen Knoten 22 in Bezug auf die jeweils anderen Knoten 22 des Gebiets 20. Die Heuristikwerte repräsentieren jeweils die geschätzten Kosten von dem jeweils einen Knoten 22 zu dem jeweils anderen Knoten 22. Des Weiteren umfassen die digitalen Kartendaten die vorgegebenen Korrekturwerte für die jeweiligen Knoten 22.

Das System kann Teil eines Navigationssystems für ein Fahrzeug und/oder für Personen und/oder Teil eines Fahrerassistenzsystems und/oder eines mobilen Endgerätes, zum Beispiel eines Smartphones, und/oder eines Computers sein. Die Speichereinheit kann insbesondere eine Datenbank umfassen.

Bezugszeichenliste

| | | |
|---|---|---|
| 20 | Gebiet | |
| 22 | Knoten | |
| 22a | aktueller Knoten | |
| 24 | Verbindung | |
| 28 | Ausgangsknoten | |
| 30 | Zielknoten | |
| 40 | Segmentbereich | |
| 40' | Zielknotensegmentbereich | |
| 100 | System | |
| 110 | Vorrichtung | |
| 120 | Speichereinheit | |
| g | Kantenkosten | |
| h | zielknotenbezogene Heuristik | |
| k | zielknotenbezogener Korrekturwert | |
| k' | Korrekturwert bezogen auf ein Segment | |
| Cost | Kostenverhältnis | |
| f | Gesamtkosten | |
| S12, ..., S18 | Programmschritte | |

**Patentansprüche**

1. Verfahren zum Ermitteln einer Route für ein Navigationssystem und/oder ein Fahrerassistenzsystem, dem zumindest eine Speichereinheit zum Speichern von digitalen Kartendaten für ein Streckennetz und/oder Wegenetz eines vorgegebenen Gebiets (20) zugeordnet ist, wobei die digitalen Kartendaten umfassen:

   - jeweilige Knoten (22) des Gebiets (20) und Verbindungen (24) zwischen den jeweiligen Knoten (22) des Gebiets (20),
   - jeweilige Kantenkosten (g) für die jeweiligen Verbindungen (24) der Knoten (22) und
   - vorgegebene Korrekturwerte für die jeweiligen Knoten (22), bei dem die Route von einem vorgegebenen Ausgangsknoten (28) zu einem vorgegebenen Zielknoten (30) ermittelt wird abhängig von den in der Speichereinheit gespeicherten digitalen Kartendaten derart, dass für eine mögliche Expansion eines jeweiligen aktuellen Knotens (22a) für den aktuellen Knoten (22a) Gesamtkosten (f) ermittelt werden abhängig von einer Summe von Kantenkosten (g) einer optimalen Route vom Ausgangsknoten (28) bis zum aktuellen Knoten (22a) und einem zielknotenbezogenen Heuristikwert (h) für den aktuellen Knoten (22a), der jeweils geschätzte Kosten von dem aktuellen Knoten (22a) zu dem Zielknoten (30) repräsentiert, und einem vorgegebenen zielknotenbezogenen Korrekturwert (k), **dadurch gekennzeichnet, dass** der Korrekturwert repräsentativ ist für einen Mittelwert von Kostenverhältnissen (Cost) jeweiliger Knoten (22) einer vorgegebenen Menge, die den Zielknoten umfasst,

wobei die jeweiligen Kostenverhältnisse (Cost) abhängig sind von

- den Kantenkosten (g) der Verbindungen (24), die zwischen dem aktuellen Knoten (22a) und dem jeweiligen Knoten (22) der Menge liegen und die eine optimale Route zwischen dem aktuellen Knoten (22a) und diesem Knoten (22) der Menge repräsentieren, und
- einem Heuristikwert des aktuellen Knotens (22a) in Bezug auf diesen jeweiligen Knoten (22) der Menge.

2. Verfahren nach Anspruch 1,
bei dem die digitalen Kartendaten die jeweiligen Positionen der Knoten (22) umfassen und der zielknotenbezogene Heuristikwert (h) ermittelt wird abhängig von der Position des aktuellen Knotens (22a) und der Position des Zielknotens (30).

3. Verfahren nach Anspruch 1,
bei dem die digitalen Kartendaten vorgegebene Heuristikwerte für die jeweiligen Knoten (22) in Bezug auf die jeweils anderen Knoten (22) des Gebiets (20) umfassen, die jeweils geschätzte Kosten von dem jeweils einen Knoten (22) zu dem jeweils anderen Knoten (22) repräsentieren, und somit der zielkontenbezogene Heuristikwert (h) vorgegeben ist.

4. Verfahren nach einem der vorstehenden Ansprüche,
bei dem der jeweilige zielknotenbezogene Heuristikwert (h) die Euklidische Distanz zwischen dem aktuellen Knoten (22a) und dem Zielknoten (30) repräsentiert.

5. Verfahren nach einem der vorstehenden Ansprüche,
bei dem der Heuristikwert des aktuellen Knotens (22a) in Bezug auf den jeweiligen Knoten (22) der Menge die Euklidische Distanz repräsentiert zwischen dem aktuellen Knoten (22a) und diesem jeweiligen Knoten (22) der Menge.

6. Verfahren nach einem der vorstehenden Ansprüche,
bei dem das Gebiet (20) in mehrere Segmentbereiche (40) unterteilt ist und die vorgegebene Menge von Knoten (22) ausgewählte Knoten (22) umfasst, die in einem Zielknotensegmentbereich (40') angeordnet sind, der zumindest den Zielknoten (30) umfasst.

7. Verfahren nach einem der vorstehenden Ansprüche,
bei dem der Mittelwert der Kostenverhältnisse (Cost) der Knoten (22) der Menge einen arithmetischen Mittelwert der Kostenverhältnisse (Cost) repräsentiert.

8. Verfahren nach Anspruch 6 oder 7,
bei dem der jeweilige Segmentbereich (40) des Gebiets (20) einen vorgegebenen Radiusbereich ausgehend von dem aktuellen Knoten (22a) und einen vorgegebenen Winkelbereich um den aktuellen Knoten (22a) umfasst.

9. Verfahren zum Ermitteln von Korrekturwerten für einen Routenberechnungsalgorithmus zur Verwendung in einem Verfahren nach Anspruch 1 auf Basis von digitalen Kartendaten für ein Streckennetz und/oder Wegenetz eines vorgegebenen Gebiets (20), wobei die digitalen Kartendaten umfassen:

- jeweilige Knoten (22) des Gebiets (20) und Verbindungen (24) zwischen den jeweiligen Knoten (22) des Gebiets (20) und
- jeweilige Kantenkosten (g) für die jeweiligen Verbindungen (24) der Knoten (22),

**dadurch gekennzeichnet, dass** für zumindest einen Teil der Knoten (22) des Gebietes für den jeweiligen Knoten (22) zumindest eine Bezugsmenge von Knoten (22) vorgegeben wird und jeweils für die vorgegebene Bezugsmenge von Knoten (22)

- ein Kostenverhältnis für den jeweiligen Knoten (22) der Bezugsmenge ermittelt wird abhängig von

- - den Kantenkosten (g) der Verbindungen (24), die zwischen dem Knoten (22), für den der Korrekturwert ermittelt wird, und dem jeweiligen Knoten (22) der Bezugsmenge liegen und die eine optimale Route zwischen dem Knoten (22), für den der Korrekturwert ermittelt wird, und dem Knoten (22) der Bezugsmenge repräsentieren, und

- - einem Heuristikwert des Knotens (22), für den der Korrekturwert ermittelt wird, in Bezug auf den Knoten (22) der Bezugsmenge, und

- ein Mittelwert ermittelt wird abhängig von den ermittelten Kostenverhältnissen (Cost) der Knoten (22) dieser Bezugsmenge und
- ein Korrekturwert ermittelt wird abhängig von dem Mittelwert.

**10.** Verfahren nach Anspruch 9, bei dem die digitalen Kartendaten die jeweiligen Positionen der Knoten (22) umfassen und der Heuristikwert des Knotens (22), für den der Korrekturwert ermittelt wird, in Bezug auf den jeweiligen Knoten der Bezugsmenge ermittelt wird abhängig von der Position des Knotens (22), für den der Korrekturwert ermittelt wird, und der Position des jeweiligen Knotens der Bezugsmenge.

**11.** Verfahren nach Anspruch 9, bei dem die digitalen Kartendaten vorgegebene Heuristikwerte für die jeweiligen Knoten (22) in Bezug auf die jeweils anderen Knoten (22) des Gebiets (20) umfassen, die jeweils geschätzte Kosten von dem jeweils einen Knoten (22) zu dem jeweils anderen Knoten (22) repräsentieren, und somit der Heuristikwert des Knotens (22), für den der Korrekturwert ermittelt wird, in Bezug auf den jeweiligen Knoten der Bezugsmenge vorgegeben ist.

**12.** Verfahren nach einem der vorstehenden Ansprüche 9 bis 11,
bei dem der Heuristikwert des Knotens (22), für den der Korrekturwert ermittelt wird, in Bezug auf den Knoten (22) der Bezugsmenge die Euklidische Distanz repräsentiert zwischen dem Knoten (22), für den der Korrekturwert ermittelt wird, und dem Knoten der Bezugsmenge.

**13.** Verfahren nach einem der vorstehenden Ansprüche 9 bis 12,
bei dem das Gebiet (20) ausgehend von dem jeweiligen Knoten, für den die Korrekturwerte berechnet werden, in mehrere Segmentbereiche (40) unterteilt ist und ausgewählte Knoten (22) der jeweiligen Segmentbereiche (40) jeweils eine der vorgegebenen Bezugsmengen von Knoten (22) bilden.

**14.** Verfahren nach Anspruch 13,
bei dem die vorgegebenen Segmentbereiche (40) des Gebiets (20) jeweils einen vorgegebenen Radiusbereich umfassen ausgehend von dem jeweiligen Knoten (22), für den die Korrekturwerte ermittelt werden, und einen vorgegebenen Winkelbereich um diesen Knoten (22) umfassen, für den die Korrekturwerte ermittelt werden.

**15.** Vorrichtung zum Ermitteln einer Route für ein Navigationssystem und/oder ein Fahrerassistenzsystem, dem zumindest eine Speichereinheit zum Speichern von digitalen Kartendaten zugeordnet ist, wobei die digitalen Kartendaten für ein Streckennetz und/oder Wegenetz eines vorgegebenen Gebiets (20) umfassen:

- jeweilige Knoten (22) des Gebiets (20) und Verbindungen (24) zwischen den jeweiligen Knoten (22) des Gebiets (20),
- jeweilige Kantenkosten (g) für die jeweiligen Verbindungen (24) der Knoten (22) und
- vorgegebene Korrekturwerte für die jeweiligen Knoten (22), **dadurch gekennzeichnet, dass** die Vorrichtung ausgebildet ist, das Verfahren nach einem der Ansprüche 1 bis 8 auszuführen.

**16.** System, das eine Speichereinheit und eine Vorrichtung gemäß Anspruch 15 aufweist und bei dem in der Speichereinheit digitale Kartendaten für ein Streckennetz und/oder Wegenetz eines vorgegebenen Gebiets (20) gespeichert sind und die Vorrichtung mit der Speichereinheit signaltechnisch gekoppelt ist und ausgebildet ist, die digitalen Kartendaten aus der Speichereinheit auszulesen, wobei die digitalen Kartendaten umfassen:

- jeweilige Knoten (22) des Gebiets (20) und Verbindungen (24) zwischen den jeweiligen Knoten (22) des Gebiets (20),
- jeweilige Kantenkosten (g) für die jeweiligen Verbindungen (24) der Knoten (22), und
- vorgegebene Korrekturwerte für die jeweiligen Knoten (22).

**Claims**

**1.** A method for determining a route for a navigation system and/or a driver assistance system which is assigned at least one memory unit for storing digital map data for a road network and/or a path network of a predetermined area (20), wherein the digital map data comprise:

- respective nodes (22) of the area (20) and connections (24) between the respective nodes (22) of the area (20),
- respective edge costs (g) for the respective connections (24) of the nodes (22), and
- predetermined correction values for the respective nodes (22), wherein

the route from a predetermined starting node (28) to a predetermined destination node (30) is determined subject to the digital map data, stored in the memory unit, such that for a possible expansion of a respective current node (22a), total costs (f) are determined for the current node (22a) subject to a total of edge costs (g) of an optimum route from the starting node (28) to the current node (22a) and a destination node-based heuristic value (h) for the current node (22a) which represents respectively estimated costs from the current node (22a) to the destination node (30), and a predetermined destination node-based correction value (k),
**characterised in that** the correction value is representative of an average of cost ratios (cost) of respective nodes (22) of a predetermined set which comprises the destination node, wherein the respective cost ratios (cost) are subject to

- the edge costs (g) of the connections (24) which lie between the current node (22a) and the respective node (22) of the set and which represent an optimum route between the current node (22a) and this node (22) of the set, and
- a heuristic value of the current node (22a) with respect to this respective node (22) of the set.

2. A method according to claim 1, wherein the digital map data comprise the respective positions of the nodes (22), and the destination node-based heuristic value (h) is determined subject to the position of the current node (22a) and to the position of the destination node (30).

3. A method according to claim 1, wherein the digital map data comprise predetermined heuristic values for the respective nodes (22) with respect to the respective other nodes (22) of the area (20) which respectively represent estimated costs from one node (22) in each case to the other node (22) in each case, and the destination node-based heuristic value (h) is thus predetermined.

4. A method according to any of the preceding claims, wherein the respective destination node-based heuristic value (h) represents the Euclidean distance between the current node (22a) and the destination node (30).

5. A method according to any of the preceding claims, wherein the heuristic value of the current node (22a) with respect to the respective node (22) of the set represents the Euclidean distance between the current node (22a) and this respective node (22) of the set.

6. A method according to any of the preceding claims, wherein the area (20) is divided into a plurality of segment regions (40), and the predetermined set of nodes (22) comprises selected nodes (22) which are arranged in a destination node segment region (40') which comprises at least the destination node (30).

7. A method according to any of the preceding claims, wherein the average of the cost ratios (cost) of the nodes (22) of the set represents an arithmetic average of the cost ratios (cost).

8. A method according to claim 6 or claim 7, wherein the respective segment region (40) of the area (20) comprises a predetermined radius region starting from the current node (22a) and a predetermined angle region around the current node (22a).

9. A method for determining correction values for a route calculation algorithm for use in a method according to claim 1 based on digital map data for a road network and/or a path network of a predetermined area (20), wherein the digital map data comprise:

- respective nodes (22) of the area (20) and connections (24) between the respective nodes (22) of the area (20), and
- respective edge costs (g) for the respective connections (24) of the nodes (22),

**characterised in that** at least one reference set of nodes (22) is predetermined for at least some of the nodes (22) of the area (20) for the respective node (22), and respectively determined for the predetermined reference set of nodes (22) is

- a cost ratio for the respective node (22) of the reference set, subject to

- - the edge costs (g) of the connections (24) which lie between the node (22), for which the correction value is determined, and the respective node (22) of the reference set and which represent an optimum route between the node (22), for which the correction value is determined, and the node (22) of the reference set, and
- - a heuristic value of the node (22), for which the correction value is determined, with respect to the node (22) of the reference set, and

- an average is determined subject to the determined cost ratios (cost) of the nodes (22) of this reference set and
- a correction value is determined subject to the average.

10. A method according to claim 9, wherein the digital map data comprise the respective positions of the nodes (22), and the heuristic value of the node (22), for which the correction value is determined, with respect to the respective node of the reference set is determined subject to the position of the node (22), for which the correction value is determined, and to the position of the respective node of the reference set.

11. A method according to claim 9, wherein the digital map data comprise predetermined heuristic values for the respective nodes (22) with respect to the other nodes (22) in each case of the area (20) which respectively represent estimated costs from one node (22) in each case to the other node (22) in each case, and the heuristic value of the node (22), for which the correction value is determined, with respect to the respective node of the reference set is thus predetermined.

12. A method according to any of the preceding claims 9 to 11, wherein the heuristic value of the node (22), for which the correction value is determined, in respect of the node (22) of the reference set represents the Euclidean distance between the node (22), for which the correction value is determined, and the node of the reference set.

13. A method according to any of the preceding claims 9 to 12, wherein the area (20) starting from the respective node, for which the correction values are determined, is divided into a plurality of segment regions (40) and selected nodes (22) of the respective segment regions (40) respectively form one of the predetermined reference sets of nodes (22).

14. A method according to claim 13, wherein the predetermined segment regions (40) of the area (20) respectively comprise a predetermined radius region starting from the respective node (22), for which the correction values are determined, and a predetermined angle region around this node (22), for which the correction values are determined.

15. A device for determining a route for a navigation system and/or a driver assistance system which is assigned at least one memory unit for storing digital map data, wherein the digital map data for a road network and/or a path network of a predetermined area (20) comprise:

- respective nodes (22) of the area (20) and connections (24) between the respective nodes (22) of the area (20),
- respective edge costs (g) for the respective connections (24) of the nodes, and
- predetermined correction values for the respective nodes (22), **characterised in that** the device is configured to implement the method according to any of claims 1 to 8.

16. A system which has a memory unit and a device according to claim 15 and wherein digital map data for a road network and/or a path network of a predetermined area (20) are stored in the memory unit, and the device is coupled in terms of signals to the memory unit and is configured to read out the digital map data from the memory unit, wherein the digital map data comprise:

- respective nodes (22) of the area (20) and connections (24) between the respective nodes (22) of the area (20),
- respective edge costs (g) for the respective connections (24) of the nodes, and
- predetermined correction values for the respective nodes (22).

**Revendications**

1. Procédé permettant de déterminer un itinéraire destiné à un système de navigation et/ou à un système d'assistance à un conducteur auquel est associée au moins une unité de mémoire pour permettre d'enregistrer des données cartographiques numériques d'un réseau routier et/ou d'un réseau de rues d'un domaine (20) prédéfini, ces données cartographiques numériques comprenant :

   - des noeuds respectifs (22) du domaine (20) et des liaisons (24) entre les différents noeuds (22) du domaine (20),
   - des écarts des bords (g) respectifs des différentes liaisons (24) entre les noeuds (22), et
   - des valeurs de correction prédéfinies pour les noeuds (22) respectifs, selon lequel :

   la trajectoire entre un noeud de départ (28) prédéfini et un noeud cible (30) prédéfini est déterminée en fonction des données cartographiques numériques enregistrées dans l'unité de mémoire de sorte que pour une expansion possible d'un noeud actuel (22a) respectif, pour ce noeud actuel (22a) on détermine des écarts totaux (f) en fonction de la somme des écarts des bords (g) d'une trajectoire optimum entre le noeud de départ (28) et le noeud actuel (22a), d'une valeur heuristique (h) spécifique au noeud cible pour le noeud actuel (22a) qui représente l'écart estimé respectif entre le noeud actuel (22a) et le noeud cible (30) et d'une valeur de correction (k) prédéfinie spécifique noeud cible,

   **caractérisé en ce que**
   la valeur de correction est représentative de la valeur moyenne de coefficients d'écart (Cost) de noeuds respectifs (22) d'un ensemble prédéfini qui comprend le noeud cible,
   les coefficients d'écart (Cost) respectifs étant en fonction,

   - des écarts des bords (g) des liaisons (24) situées entre le noeud actuel (22a) et le noeud respectif (22) de l'ensemble et qui représentent un itinéraire optimum entre le noeud actuel (22a) et ce noeud (22) de l'ensemble, et
   - une valeur heuristique du noeud actuel (22a) par rapport à ce noeud respectif (22) de l'ensemble.

2. Procédé conforme à la revendication 1,
   selon lequel les données cartographiques numériques comprennent les positions respectives des noeuds (22), et la valeur heuristique (h) spécifique au noeud cible est déterminée en fonction de la position du noeud actuel (22a) et de la position du noeud cible (30).

3. Procédé conforme à la revendication 1,
   selon lequel les données cartographiques numériques comprennent des valeurs heuristiques prédéfinies pour les noeuds (22) respectifs en fonction des autres noeuds (22) respectifs du domaine (20), qui représentent l'écart estimé respectif entre le noeud respectif (22) et l'autre noeud respectif (22) et la valeur heuristique (h) spécifique au noeud-cible est ainsi fixée.

4. Procédé conforme à l'une des revendications précédentes,
   selon lequel la valeur heuristique spécifique au noeud cible respective (h) représente la distance euclidienne entre le noeud actuel (22a) et le noeud cible (30).

5. Procédé conforme à l'une des revendications précédentes,
   selon lequel la valeur heuristique du noeud actuel (22a) par rapport au noeud (22) respectif de l'ensemble représente la distance euclidienne entre le noeud (22a) actuel et le noeud respectif (22) de l'ensemble.

6. Procédé conforme à l'une des revendications précédentes,
   selon lequel le domaine (20) est subdivisé en plusieurs segments (40) et l'ensemble de noeuds (22) prédéfini comprend des noeuds (22) sélectionnés qui sont situés dans le segment (40') du noeud cible qui comprend au moins le noeud cible (30).

7. Procédé conforme à l'une des revendications précédentes,
   selon lequel la valeur moyenne des coefficients d'écart (Cost) des noeuds (22) de l'ensemble représente la valeur arithmétique moyenne des coefficients d'écart (Cost).

8. Procédé conforme à la revendication 6 ou 7,
   selon lequel le segment respectif (40) du domaine (20) comprend un segment de rayon prédéfini à partir du noeud actuel (22a) et un segment angulaire prédéfini autour du noeud actuel (22a).

9. Procédé permettant de déterminer des valeurs de correction pour un algorithme de calcul d'itinéraire destiné à être utilisé lors de la mise en oeuvre d'un procédé conforme à la revendication 1 à partir de données cartographiques numériques pour un réseau routier et/ou un réseau de rues d'un domaine (20) prédéfini, les données cartographiques numériques comprenant :

- des noeuds respectifs (22) du domaine (20) et des liaisons (24) entre les différents noeuds (22) du domaine (20), et
- des écarts des bords respectifs (g) des différentes liaisons (24) des noeuds (22),

**caractérisé en ce que**
pour au moins une partie des noeuds (22) du domaine, pour ces noeuds (22) respectifs au moins un ensemble de référence de noeuds (22) est fixé, et pour cet ensemble de référence respectif de noeuds (22),

- un coefficient d'écart pour le noeud respectif (22) de l'ensemble de référence est déterminé en fonction,
- des écarts des bords (g) des liaisons (24) qui sont situés entre le noeud (22) pour lequel la valeur de correction est déterminée et le noeud respectif (22) de l'ensemble de référence et qui représentent une trajectoire optimum entre le noeud (22) pour lequel la valeur de correction est déterminée et le noeud (22) de l'ensemble de référence, et
- d'une valeur heuristique du noeud (22) pour lequel la valeur de correction est déterminée par rapport au noeud (22) de l'ensemble de référence, et
- une valeur moyenne est déterminée en fonction des coefficients d'écart (Cost) déterminés des noeuds (22) de cet ensemble de référence, et
- une valeur de correction est déterminée en fonction de la valeur moyenne.

10. Procédé conforme à la revendication 9,
selon lequel les données cartographiques numériques comprennent les positions respectives des noeuds (22), et la valeur heuristique du noeud (22) pour lequel la valeur de correction est déterminée, est déterminée par rapport au noeud respectif de l'ensemble de référence en fonction de la position du noeud (22) pour lequel la valeur de correction est déterminée et de la position du noeud respectif de l'ensemble de référence.

11. Procédé conforme à la revendication 9,
selon lequel les données cartographiques numériques comprennent des valeurs heuristiques prédéfinies pour les différents noeuds (22) par rapport aux autres noeuds respectifs (22) du domaine (20), qui représentent l'écart estimé respectif entre le noeud respectif (22) et l'autre noeud respectif (22) et la valeur heuristique du noeud (22) pour lequel la valeur de correction est déterminée par rapport au noeud respectif de l'ensemble de référence est ainsi fixée.

12. Procédé conforme à l'une des revendications précédentes 9 à 11,
selon lequel la valeur heuristique du noeud (22) pour lequel la valeur de correction est déterminée par rapport au noeud (22) de l'ensemble de référence représente la distance euclidienne entre le noeud (22) pour lequel la valeur de correction est déterminée et le noeud de l'ensemble de référence.

13. Procédé conforme à l'une des revendications précédentes 9 à 12,
selon lequel le domaine (20) est subdivisé en plusieurs segments (40) à partir du noeud respectif pour lequel les valeurs de correction sont calculées et des noeuds (22) sélectionnés du segment respectif (40) forment respectivement l'un des ensembles de référence prédéfinis de noeuds (22).

14. Procédé conforme à la revendication 13,
selon lequel les segments prédéfinis (40) du domaine (20) comprennent respectivement un segment de rayon prédéfini à partir du noeud respectif (22) pour lequel les valeurs de correction sont déterminées, et un segment angulaire prédéfini autour du noeud (22) pour lequel les valeurs de correction sont déterminées.

15. Dispositif permettant de déterminer un itinéraire pour un système de navigation et/ou un système d'assistance à un conducteur auquel est associée au moins une unité de mémoire permettant d'enregistrer des données cartographiques numériques, ces données cartographiques numériques comprenant, pour un réseau routier et/ou un réseau de rues d'un domaine (20) prédéfini,

- des noeuds respectifs (22) du domaine (20) et des liaisons (24) entre les noeuds respectifs (22) du domaine (20),
- des écarts des bords (g) respectifs des différentes liaisons (24) des noeuds (22), et
- des valeurs de correction prédéfinies pour les noeuds respectifs (22),

**caractérisé en ce que**
le dispositif est réalisé pour permettre la mise en oeuvre du procédé conforme à l'une des revendications 1 à 8.

16. Système comprenant une unité de mémoire et un dispositif conforme à la revendication 15, et dans lequel, dans l'unité de mémoire sont enregistrées des données cartographiques numériques pour un réseau routier et/ou un réseau de rues d'un domaine (20) prédéfini, et, le dispositif est couplé par la technique des signaux avec l'unité de mémoire et réalisé pour pouvoir lire les données cartographiques numériques dans l'unité de mémoire, les données cartographiques numériques comprenant :

- des noeuds respectifs (22) du domaine (20) et des liaisons (24) entre les différents noeuds (22) du domaine (20),
- des écarts des bords (g) respectifs des différentes liaisons (24) des noeuds (22), et
- des valeurs de corrections prédéfinies pour les différents noeuds (22).

Figur 1

# Figur 2a

Figur 2b

Figur 2c

Figur 3

## Figur 4a

## Figur 4b

Figur 4c

Figur 5

100

110

110

**Figur 6a**

Stand der Technik

**Figur 6b**

Stand der Technik

**Figur 6c**

Stand der Technik

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008027957 A1